(19) Europäisches Patentamt / European Patent Office / Office européen des brevets

(11) **EP 3 328 026 B1**

(12) **FASCICULE DE BREVET EUROPEEN**

(45) Date de publication et mention
de la délivrance du brevet:
**19.08.2020 Bulletin 2020/34**

(51) Int Cl.:
*H04L 29/06* (2006.01)   *G06F 21/62* (2013.01)
*H04W 12/02* (2009.01)

(21) Numéro de dépôt: **17306657.2**

(22) Date de dépôt: **29.11.2017**

(54) **PROCÉDÉS DE CAVIARDAGE D'UN DOCUMENT ORIGINAL OU DE VÉRIFICATION DE L'AUTHENTICITÉ D'UN DOCUMENT FINAL**

VERFAHREN ZUM EINSCHWÄRZEN EINES ORIGINALDOKUMENTS ODER ZUM ÜBERPRÜFEN DER ECHTHEIT EINES ENDGÜLTIGEN DOKUMENTS

METHODS OF CENSORING AN ORIGINAL DOCUMENT OR VERIFYING THE AUTHENTICITY OF A FINAL DOCUMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2016 FR 1661647**

(43) Date de publication de la demande:
**30.05.2018 Bulletin 2018/22**

(73) Titulaire: **Idemia Identity & Security France
92400 Courbevoie (FR)**

(72) Inventeurs:
• **KEUFFER, Julien Paul
92130 Issy Les Moulineaux (FR)**
• **CHABANNE, Hervé
92130 Issy Les Moulineaux (FR)**
• **HUGEL, Rodolphe
92130 Issy Les Moulineaux (FR)**

(74) Mandataire: **Regimbeau
20, rue de Chazelles
75847 Paris Cedex 17 (FR)**

(56) Documents cités:
**US-B1- 7 802 305**

• **NAVEH ASSA ET AL: "PhotoProof: Cryptographic Image Authentication for Any Set of Permissible Transformations", 2016 IEEE SYMPOSIUM ON SECURITY AND PRIVACY (SP), IEEE, 22 mai 2016 (2016-05-22), pages 255-271, XP032945703, DOI: 10.1109/SP.2016.23**
• **BEN-SASSON ELI ET AL: "Scalable Zero Knowledge via Cycles of Elliptic Curves", 17 août 2014 (2014-08-17), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 276 - 294, XP047337930, ISSN: 0302-9743 ISBN: 978-3-540-76785-5 * abrégé ***

**Description**

DOMAINE TECHNIQUE GENERAL

La présente invention concerne le domaine de l'authentification, et en particulier un procédé de caviardage sécurisé d'un document.

ETAT DE L'ART

Il est courant de devoir fournir des documents comme justificatifs administratifs tels qu'une facture d'électricité (justificatif de domicile), un bulletin de salaire (justificatif d'emploi), un extrait de compte bancaire (justificatif de revenus) dans certaines démarches de tous les jours.

Ces documents permettent de fournir une preuve qui est considérée comme valide car l'émetteur est supposé de confiance.

Toutefois, on constate qu'ils peuvent en outre divulguer des informations sensibles, inutiles pour la démarche, et que l'utilisateur souhaiterait ne pas révéler. Par exemple, sur une facture d'électricité figure le nom de son conjoint alors que seule l'adresse est importante, sur un bulletin de salaire figure le montant du salaire alors que seul le nom de la société est important, et sur un extrait de compte bancaire figure le détail de toutes les opérations effectuées, alors que seul le solde est important.

Il est tentant que vouloir modifier le document pour cacher ces informations, en particulier en noircissant les zones associées. On appelle cela du « caviardage » de document (ce terme est typiquement utilisé pour les documents confidentiels qui sont révélés au public par exemple lors d'un procès).

Or, si cela est fait par l'utilisateur ou par une tierce partie autre que l'émetteur du document, un doute sur la validité du document ou sur le fait que seules les parties noircies aient été modifiées peut être jeté : on peut par exemple avoir caché le nom du conjoint mais aussi avoir modifié le nom qui figurait à l'origine sur la facture pour s'accréditer une fausse adresse.

Dès lors, il faut trouver un moyen de continuer à garantir l'authenticité du document original, tout en ne fournissant que le document modifié.

On connait le Projet de sécurisation de documents administratifs pour éviter l'usurpation d'identité ou la fraude, initié par l'agence nationale des titres sécurisés (ANTS) et nommé 2D-Doc (https://ants.gouv.fr/Les-solutions/2D-Doc).

Dans ce projet, un code-barres 2D est inséré dans un document qui sera utilisé par l'administration, ce code-barres certifie l'intégrité et l'authenticité du document. En effet, il contient diverses informations à propos du document (son contenu, son émetteur, sa date d'émission, etc.). Ces informations sont ensuite condensées dans un condensat, qui en garantit l'intégrité, et sont signées numériquement par l'émetteur du document, ce qui en garantit l'authenticité. L'Etat maintient une liste d'émetteurs reconnus dont on peut vérifier l'authenticité de la signature.

La solution 2D-Doc permet de garantir l'authenticité et l'intégrité d'un document, et même si ce n'est encore pas prévu on peut imaginer requérir certaines modifications pour des raisons de préservation de la vie privée au moment de l'émission du document (avant la génération et l'apposition du code-barre). En effet toute modification ultérieure du document rend sa signature caduque (puisqu'elle ne correspondrait plus au document).

Cela permettrait de résoudre d'une certaine manière le problème mais resterait très peu pratique car toute modification ultérieure reste impossible.

A noter qu'on connait des fonctions de hachage dites robustes, c'est-à-dire qui donnent un résultat proche (selon une certaine distance) du condensat du document original si on a appliqué à ce document une transformation définie. On reçoit le condensat du document original, la signature de ce condensat et le condensat modifié. La vérification consiste à valider la signature du condensat reçu, calculer le condensat du document modifié et vérifier que ce condensat du document modifié est suffisamment proche du condensat du document original. On pourrait s'en servir pour améliorer le code-barre 2D.

Cependant, ces fonctions ont des taux de fausse acceptation non négligeables dans la mesure où elles sont construites pour accepter des transformations qui ne permettent pas de noircir une zone donnée. Ainsi, non seulement le noircissement ne constitue pas une transformation qui donnerait un condensat suffisamment proche, mais surtout d'autres transformations vraiment frauduleuses pourraient être acceptées comme légitimes car elles donneraient un condensat suffisamment proche du condensat original.

Il serait par conséquent souhaitable de disposer d'un nouveau procédé de retrait vérifiable d'informations sensibles sur des documents administratifs, qui soit fiable (impossibilité de procéder à des modifications de nature à falsifier le document), efficace (peu de temps et de puissance de calcul nécessaires aussi bien pour retirer les informations sensibles que pour vérifier l'authenticité du document ainsi modifié) et ergonomique (possibilité de retirer des informations autant de fois que l'on souhaite et quand on le souhaite).

PRESENTATION DE L'INVENTION

L'invention est définie dans les revendications indépendantes.

Selon un premier aspect, la présente invention concerne un procédé de caviardage d'un document original constitué d'une matrice de pixels chacun défini par un vecteur d'au moins une valeur numérique, le procédé comprenant la mise en œuvre par des moyens de traitement de données d'un équipement, d'étapes de :

(a) Détermination d'un ensemble de pixels de ladite matrice correspondant à une ou plusieurs zones à caviarder du document original ;

(b) Génération d'un document final correspondant au document original dans lequel les vecteurs définissant les pixels dudit ensemble sélectionné sont remplacés par un vecteur arbitraire ;

(c) génération d'une preuve à divulgation nulle de connaissances du fait que les matrices de pixels du document original et du document final ne diffèrent que par des pixels appartenant audit ensemble sélectionné.

Selon d'autres caractéristiques avantageuses et non limitatives :

- le document original est associé à un condensat obtenu par une fonction de hachage donnée, ladite preuve à divulgation nulle de connaissance générée à l'étape (c) étant également une preuve du fait que ledit condensat est bien le résultat de l'application de ladite fonction de hachage donnée au document original ;
- le document original et ledit condensat sont fournis par un organisme émetteur, le procédé comprenant en outre la vérification préalable par lesdits moyens de traitement de données que ledit condensat est bien le résultat de l'application de ladite fonction de hachage donnée au document original ;
- ledit condensat est signé par ledit organisme émetteur ;
- l'étape (a) comprend la définition préalable de chaque zone à caviarder du document original sous la forme d'une figure géométrique plane, ledit ensemble de pixels correspondant à une ou plusieurs zones à caviarder du document original étant déterminé comme l'ensemble des pixels de la matrice inclus dans au moins une desdites formes géométriques planes ;
- lesdites formes géométriques planes sont des rectangles chacun définis par quatre paramètres ;
- au moins un rectangle définissant une zone à caviarder du document original est directement sélectionné par l'utilisateur au moyen d'une interface de l'équipement, l'étape (a) comprenant la détermination des valeurs desdits quatre paramètres définissant le rectangle sélectionné ;
- une chaine de caractère à caviarder du document original est sélectionnée par l'utilisateur au moyen d'une interface de l'équipement, l'étape (a) comprenant la détermination des valeurs desdits quatre paramètres du ou des rectangles de l'image nécessaires pour recouvrir ladite chaine de caractère sectionnée ;
- la preuve à divulgation nulle de connaissances générée à l'étape (c) est un objet cryptographique de type zkSNARK ;
- ladite fonction de hachage donnée est une fonction de hachage basée sur la somme de sous-ensembles permettant de préserver l'efficacité de la génération de la preuve.

Selon un deuxième aspect, l'invention concerne un procédé de vérification de l'authenticité d'un document final obtenu par la mise en œuvre sur un document original par un procédé de caviardage selon le premier aspect, le document final étant associé à ladite preuve à divulgation nulle de connaissances du fait que les matrices de pixels du document original et du document final ne diffèrent que par des pixels appartenant audit ensemble sélectionné, le procédé comprenant la mise en œuvre par des moyens de traitement de données d'un serveur, d'une étape de vérification que ladite preuve à divulgation nulle de connaissances est valide.

Selon d'autres caractéristiques avantageuses et non limitatives :

- le document final est en outre associé à un condensat du document original obtenu par une fonction de hachage donnée, ladite preuve à divulgation nulle de connaissances étant également une preuve du fait que ledit condensat est bien le résultat de l'application de ladite fonction de hachage donnée au document original ;
- ledit condensat est signé par un organisme émetteur du document original, le procédé comprenant en outre une étape de vérification de la validité de ladite signature.

Selon un troisième et un quatrième aspect, l'invention propose un produit programme d'ordinateur comprenant des instructions de code pour l'exécution d'un procédé selon le premier ou le deuxième aspect de caviardage d'un document original ou de vérification de l'authenticité d'un document final ; et un moyen de stockage lisible par un équipement informatique sur lequel un produit programme d'ordinateur comprend des instructions de code pour l'exécution d'un procédé selon le premier ou le deuxième aspect de caviardage d'un document original ou de vérification de l'authenticité d'un document final.

PRESENTATION DES FIGURES

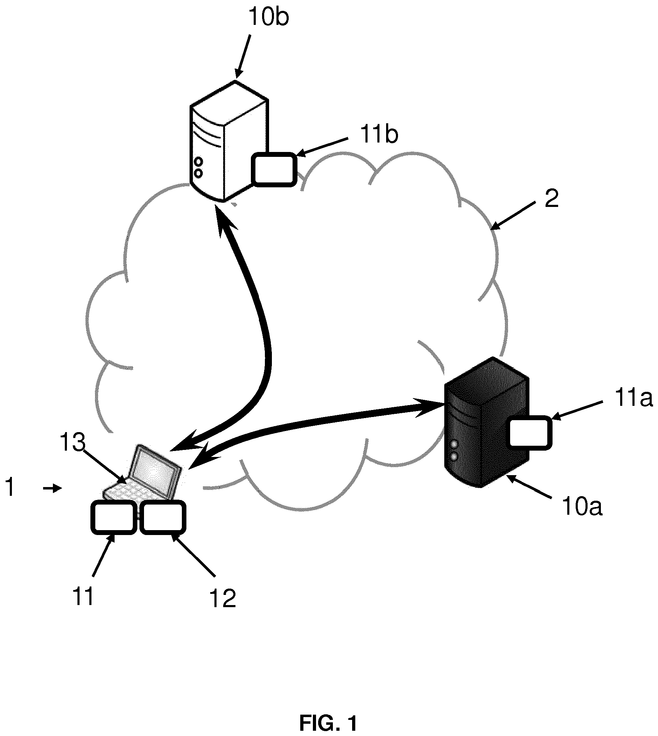

D'autres caractéristiques et avantages de la présente invention apparaîtront à la lecture de la description qui va suivre d'un mode de réalisation préférentiel. Cette description sera donnée en référence en la figure 1 annexée qui est un schéma d'une architecture pour la mise en œuvre des procédés selon l'invention.

DESCRIPTION DETAILLEE

*Architecture*

En référence à la **figure 1,** est proposé un procédé de caviardage d'un document original mis en œuvre au sein d'une architecture telle que représentée. On verra selon un deuxième aspect un procédé de vérification de l'authenticité d'un document ainsi caviardé, qu'on désignera dans la présente description comme document final.

Par « caviardage », on entend la définition classique de ce terme, à savoir le retrait d'informations considérées sensibles du document, typiquement en les noircissant. Un caviardage ne fait que diminuer la quantité d'information contenue dans le document, elle n'en rajoute ne n'en modifie pas. En cela le document n'est pas falsifié.

Le présent procédé est essentiellement mis en œuvre via un équipement 1 équipé de moyens de traitement de données 11 (un ou plusieurs processeurs), typiquement un poste de travail personnel d'un utilisateur. L'équipement 1 peut en outre comprendre des moyens de stockage de données 12 (une mémoire) pour le stockage des documents original/final, et une interface utilisateur 3 (un écran, un clavier, une souris, etc.). On comprendra que l'équipement 1 peut tout à fait être un serveur d'un tiers de confiance auquel l'utilisateur accède à distance via un terminal (par exemple via smartphone). L'équipement 1 joue comme on va l'expliquer le rôle de « prouveur »

L'équipement 1 peut être connecté en particulier via un réseau 2 tel qu'internet à un premier serveur 10a fournissant ledit document original. Le premier serveur 10a est ainsi typiquement celui d'un organisme émetteur (par exemple le serveur d'une banque si le document original est un extrait de compte). Comme l'on verra, de façon préférée l'organisme émetteur fournit également à l'équipement 1 un condensat du document original, appelé également « empreinte cryptographique » ou « haché » (« hash » en anglais), généré par des moyens de traitement de données 11a du premier serveur 10a par application d'une fonction de hachage donnée au document original. De façon encore plus préférée, ledit condensat est signé par l'organisme émetteur de sorte à garantir son authenticité.

Lorsque le document original et ledit condensat sont fournis par un organisme émetteur, le procédé comprend en outre préférentiellement la vérification préalable par lesdits moyens de traitement de données 11 que ledit condensat est bien le résultat de l'application de ladite fonction de hachage donnée au document original.

Comme représenté par la figure 1, l'équipement 1 peut également être connecté (toujours via le réseau 2) à un deuxième serveur 10b qui est typiquement le serveur d'un organisme demandeur du document comme justificatif (par exemple le serveur d'une mairie), ce deuxième serveur 10b pouvant être amené à mettre en œuvre via ses propres moyens de traitement de données 11b le procédé de vérification de l'authenticité d'un document final caviardé par l'équipement 1. Le serveur 10b joue comme on va l'expliquer le rôle de « vérifieur »

*Procédé de caviardage*

Le présent procédé de caviardage est mis en œuvre par les moyens de traitement de données 11 de l'équipement 1 sur le document original, soit reçu du premier serveur 10a soit directement chargé par l'utilisateur.

Pour le présent procédé, on considère que le document original est constitué d'une matrice de pixels chacun défini par un vecteur d'au moins une valeur numérique, i.e. que le document est représenté par une image matricielle (en anglais « bitmap »), par opposition aux images vectorielles. A noter qu'un document papier est numérisé sous forme d'une image matricielle lorsqu'il est passé dans un scanner.

De façon préférée, l'image est en noir et blanc (niveau de gris), chaque composante de la matrice est un vecteur de dimension 1, i.e. prend une valeur numérique entre 0 et 255, 0 étant un pixel noir et 255 étant un pixel blanc. Dans le cas d'une image couleur, on prend par exemple un vecteur de dimension 3 de type RGB (les trois valeurs numériques représentent respectivement les taux de rouge, vert et bleu du pixel entre 0 et 255). On comprendra que l'homme du métier n'est pas limité à ces représentations d'une image.

Dans la suite de la présente description on prendra l'exemple d'un document original en niveaux de gris (chaque pixel est représenté par une seule valeur numérique).

Le présent procédé vise à réaliser un caviardage « vérifiable » du document, c'est-à-dire pour lequel il peut être prouvé a posteriori (notamment par le deuxième serveur 10b) qu'il n'y a pas eu falsification que le retrait d'informations sensibles n'a bien fait que retirer de l'information.

Pour cela, on utilise un protocole cryptographique générant une « preuve » de l'authenticité du document final.

Le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Une application du protocole Pinocchio est donné par le protocole PhotoProof, présenté dans la publication « Assa Naveh, Eran Tromer, PhotoProof: cryptographic image authentication for any set of permissible transformations, proc. IEEE Symposium on Security & Privacy (Oakland) 2016, 255-271, IEEE, 2016 » qui permet de fournir une preuve qu'une image provenant d'un appareil photographique n'a été modifiée que selon un ensemble de transformations admissibles prédéfinies.

Toutefois, ce procédé présente l'inconvénient majeur de nécessiter une puissance de calcul importante du côté de l'exécutant. Le coût de production de la preuve d'un calcul par ce protocole est en effet supérieur de plusieurs ordres de grandeur à celui du calcul lui-même.

Ainsi, ce protocole apparait extrêmement lourd et complètement inadapté pour le présent procédé de caviardage, car même si le temps de vérification d'une preuve d'authenticité d'une image est seulement de 0,5 secondes, réaliser la preuve d'authenticité d'une photographie de taille 128x128 pixels (à titre de comparaison, un document A4 utilisé comme justificatif a généralement une taille de 740x500 voire plus de 1000x700 pixels) avec 5 transformations admissibles demande 300 secondes, et la clé dont on se sert pour réaliser la preuve fait plus de 2 Go.

Le présent procédé s'affranchit de ces difficultés en permettant comme on va le voir de générer une preuve numérique de petite taille constante (moins de 500 octets, soit 4 millions de fois moins que pour PhotoProof) en quelques secondes, et sans révéler quoi que ce soit sur les informations sensibles retirées.

Dans une première étape (a), les moyens de traitement de données 11 déterminent un ensemble de pixels de ladite matrice correspondant à une ou plusieurs zones à caviarder du document original.

Plus précisément, via l'interface 13, l'utilisateur sélectionne une ou plusieurs zones à caviarder du document original, et les moyens de traitement 11 déterminent en conséquence l'ensemble des pixels correspondant de la matrice.

L'homme du métier pourra s'appuyer sur un des nombreux algorithmes de sélection d'une partie d'une image matricielle, mais de façon avantageuse (pour l'efficacité maximale du procédé), chaque zone est définie sous la forme d'une figure géométrique plane, par exemple choisie dans une liste de figures prédéterminées (polygones, ellipses, etc.), par exemple placée par un outil de dessin. Ledit ensemble de pixels correspondant à une ou plusieurs zones à caviarder du document original est alors déterminé comme l'ensemble des pixels de la matrice inclus dans au moins une desdites formes géométriques planes

De façon préférée, dans la mesure où chaque zone à caviarder est théoriquement un texte, la figure géométrique plane est un rectangle (de dimensions personnalisables).

Tout rectangle est en effet défini par seulement quatre paramètres (soit les coordonnées de deux angles opposés, soit les coordonnées d'un angle, un paramètre de largeur et un paramètre de longueur).

Mathématiquement, si l'image est constituée d'une matrice de n*m pixels (i.e. l'image $I = \{P_{i,j}\}_{i\in[\![1;n]\!]},_{j\in[\![1;m]\!]}$), et si on prévoit qu'un rectangle est défini par les coordonnées des angles en haut à gauche et en bas à droite (respectivement notées $x_1, y_1, x_2, y_2$ avec $1 \leq x_1 < x_2 \leq n$, $1 \leq y_1 < y_2 \leq m$), alors l'ensemble $E_k$ des pixels correspondant au k-ième rectangle est simplement exprimé par la formule $\{P_{ij}\}_{i\in[\![x1;x2]\!],j\in[\![y1;y2]\!]}$, et en notant $\mathcal{C}(E_k)$ l'ensemble des coordonnées des pixels de $E_k$ on a

$$\mathcal{C}(E_k) = \{(i,j)\}_{i\in[\![x_1;x_2]\!],j\in[\![y_1;y_2]\!]}.$$

On prend l'union $E = \cup\ E_k$ des ensembles de pixels associés à au moins un rectangle.

Chaque rectangle définissant une zone à caviarder du document original est alors :

- soit directement sélectionné par l'utilisateur au moyen de l'interface 13, par exemple en cliquant sur les deux angles opposés ou en déplaçant et étirant un rectangle de référence. L'étape (a) comprend alors la détermination des valeurs desdits quatre paramètres définissant le rectangle sélectionné (en utilisant des outils classiques d'interface graphique).

- Soit indirectement sélectionné : une chaine de caractère à caviarder du document original est sélectionnée par l'utilisateur au moyen de l'interface 13 (par exemple en la tapant). L'étape (a) comprend la détermination des valeurs desdits quatre paramètres du ou des rectangles de l'image nécessaires pour recouvrir ladite chaine de caractère sectionnée. Plus précisément, par Reconnaissance Optique de Caractère (ROC), les moyens de traitement de données 11 déterminent les occurrences de cette chaîne de caractère, et pour chaque occurrence identifient la position du ou des rectangles associés (si par exemple il y a plusieurs lignes), et en déduisent les valeurs des quatre paramètres pour chacun de ces rectangles de la même façon que si l'utilisateur les avait directement sélectionnés.

A noter que les deux méthodes peuvent être utilisées pour un même document pour sélectionner diverses zones à caviarder. On comprendra que la présente invention n'est en rien limitée à cette méthode de sélection ni même aux rectangles. On peut par exemple envisager que l'utilisateur dispose d'un outil « pinceau » qu'il déplace sur l'image en sélectionnant les pixels qu'il survole lorsque le clic est enfoncé.

Dans une étape (b), les moyens de traitement de données 11 génèrent un document final correspondant au document original dans lequel les vecteurs définissant les pixels dudit ensemble sélectionné sont remplacés par un vecteur arbitraire. Cela revient à effacer les zones à caviarder, car les pixels variés à l'intérieur de ces zones sont remplacés par un type unique de pixel, en d'autres terme la zone est rendue uniforme. Les zones sont ainsi illisibles et dépourvues d'information, comme souhaité par l'utilisateur.

Dans le cas d'un document en noir et blanc (pixels définis par une unique valeur numérique), ce vecteur arbitraire est par exemple {0}, c'est-à-dire le pixel noir. Cela revient ainsi à noircir les zones à caviarder, comme on pourrait le faire à la main. On comprendra tout à fait que d'autres couleurs sont possibles.

Dans une étape (c) principale, les moyens de traitement 11 génèrent une preuve à divulgation nulle de connaissances du fait que les matrices de pixels du document original et du document final ne diffèrent que par des pixels appartenant audit ensemble sélectionné.

Plus précisément, ladite preuve à divulgation nulle de connaissance garantit l'affirmation « étant donnés les coordonnées des zones à caviarder et l'image finale, il existe un document qui ne diffère du document final que par ces zones ». En d'autres termes si E est ledit ensemble de pixels correspondant, et $P^I_{i,j}$ et $P^F_{i,j}$ les pixels respectivement des images initiale et finale :

$$\forall i,j \in [\![1;n]\!] \times [\![1;m]\!], P^I_{i,j} \neq P^F_{i,j} \Rightarrow (i;j) \in \mathcal{C}(E).$$

A noter que la réciproque n'est pas forcément vraie : un pixel dudit ensemble E ne sera pas modifié s'il a déjà ladite valeur arbitraire (par exemple un pixel noir si le caviardage est un noircissement). En d'autres termes, si $\lambda$ est ledit vecteur arbitraire :

$$\forall i,j \in \mathcal{C}(E), P^I_{i,j} = \lambda \Rightarrow P^F_{i,j} = P^I_{i,j}$$

Dans le mode de réalisation préféré où le document original est associé à un condensat obtenu par une fonction de hachage donnée, ladite preuve à divulgation nulle de connaissance générée à l'étape (c) est préférentiellement également une preuve du fait que ledit condensat est bien le résultat de l'application de ladite fonction de hachage donnée au document original.

Ladite preuve à divulgation nulle de connaissance garantit l'affirmation complète suivante : « étant donnés les coordonnées des zones à caviarder, l'image finale et le condensat d'un document original, il existe un document dont le condensat correspond à celui fourni qui ne diffère avec l'image noircie que par ces zones ».

A l'issue de l'étape (c) on obtient :

- le document final,
- avantageusement le condensat du document original, préférentiellement signé par l'émetteur,
- une preuve (de taille constante) que la modification s'est effectuée correctement et à partir du document original.

Ces éléments peuvent être fournis à l'utilisateur dans une étape (d), ou directement transmis à un tiers, comme le deuxième serveur 10b.

Ainsi, on peut lier le document final au document original mais on ne peut pas obtenir d'informations sur ce qui figurait dans les zones caviardées. Le protocole cryptographique donne une preuve rapide à vérifier (moins d'une demi-seconde) et qu'on ne peut pas falsifier : il est quasi impossible (probabilité inférieure à $1/2^{80}$, voire inférieur à $1/2^{128}$ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, le prouveur utilise la possibilité de réaliser des preuves à divulgation nulle de connaissance pour cacher le document original. Ainsi la preuve ne donne aucune information sur le document lui-même, si ce n'est que le résultat de la modification est lié à ce document.

Pour un prouveur honnête qui n'aurait pas apporté d'autres modifications au document que les zones caviardées, la différence entre la matrice de l'image finale et la matrice de l'image originale doit comporter des zéros partout, sauf peut-être dans une zone caviardée. Dans la zone brouillée, si des pixels sont définis par un vecteur égal au vecteur arbitrairement choisie, la différence sera aussi égale à zéro. Ailleurs, on teste si la différence est nulle.

Un prouveur malhonnête pourrait tenter de produire un faux document administratif à partir d'un original, profitant par exemple de la possibilité de masquer des champs du document pour s'attribuer un document administratif qui n'est pas à son nom.

On se protège contre ce type de prouveur en imposant dans le mode de réalisation préférée que la preuve contienne la vérification du condensat du document original. Ainsi la preuve contient le fait que le document original (privé) a pour condensat la valeur (publique) fournie en entrée du procédé. En choisissant une fonction de hachage bien adaptée au passage par les circuits arithmétiques (plutôt qu'une fonction de hachage standardisée par le NIST comme SHA256), cette vérification peut ne pas être dominante dans le temps de calcul de la preuve.

Ainsi, ladite fonction de hachage donnée est préférentiellement choisie parmi un ensemble de fonctions de hachage permettant de préserver l'efficacité de la réalisation de la preuve, le choix préférentiel étant, au vu de l'état de l'art actuel, une fonction hachage basée sur la somme de sous-ensembles.

En effet, les fonctions de hachage adaptées sont en particulier celles basées sur la somme de sous-ensembles (en anglais « subset sum »), dites également de type arithmétique, car le circuit arithmétique représentant la fonction a moins de portes multiplicatives. Des exemples en sont décrits dans la publication « O. Goldreich, S. Goldwasser, and S. Halevi. Collision-free hashing from lattice problems. Technical report, 1996 ».

Ces fonctions ont été utilisées dans les zkSNARKs et décrites dans la publication « E. Ben-Sasson, A. Chiesa, E. Tromer and M. Virza. Scalable Zero-Knowledge via Cycles of Elliptic Curves. CRYPTO 2014 ».

Si l'entité ayant fourni le document original et le condensat a signé cette dernière, la vérification de la signature permet d'avoir une garantie que le condensat du document est authentique, et ainsi avoir une certitude absolue que le document final n'est pas falsifié.

L'étape (c) peut être réalisée de nombreuses manières, mais de façon préférée ladite preuve à divulgation nulle de connaissances est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, le prouveur. Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de SNARKs ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :

- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 », qui est une amelioration de Pinocchio
- Le protocole présenté dans la publication « Michael Backes, Manuel Barbosa, Dario Fiore, Raphael Reischuk. ADSNARK : Nearly Practical and Privacy-Preserving Proofs on Authenticated Data. In Proceeding of the IEEE Symposium on Security and Privacy, 18 May 2015" qui produit des SNARKs sur des données authentifiées nommés ADSNARKs.
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zero Knowledge. In Proceedings of the 33rd Annual International Cryptology Conference, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :

1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.

2. Le circuit arithmétique obtenu est représenté efficacement à l'aide de trois familles de polynômes auxquelles s'ajoute un polynôme supplémentaire, appelé polynôme cible. Ces familles de polynômes forment des « Quadratic Arithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul $y = C(x)$ est correct pour une entrée $x$ si et seulement si toutes les relations décrivant le circuit arithmétique correspondant sont satisfaites en fixant comme valeur d'entrée $x$ et comme valeur de sortie $y$.

Les QAPs permettent en quelque sorte de compresser toutes les contraintes à vérifier dans une seule relations à vérifier : un polynôme construit à partir de la valeur $x$ et des trois familles du QAP doit diviser le polynôme cible.

3. Un protocole cryptographique prend alors en entrée un QAP associé à un programme, génère des clés d'évaluation et de vérification qui utilisent des courbes elliptiques pour cacher les relations polynômiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK.

*Procédé de vérification*

Selon un deuxième aspect, est proposé le procédé de vérification de l'authenticité d'un document final obtenu, ou du moins prétendument obtenu, par la mise en œuvre sur un document original par un procédé de caviardage selon le premier aspect. En d'autres termes il s'agit d'un procédé de vérification de l'authenticité d'un document caviardé (qui est potentiellement suspect du fait des zones modifiées). Ce procédé permet de prouver qu'il n'y a eu que du retrait d'informations depuis le document original, et non de la falsification.

Comme expliqué, ce procédé se distingue simplement en ce que le document final, reçu depuis un équipement 1 par exemple via le réseau 2, est associé à ladite preuve à divulgation nulle de connaissances du fait que les matrices de pixels du document original et du document final ne diffèrent que par des pixels appartenant audit ensemble sélectionné, en d'autres termes du fait que les matrices de pixels du document original et du document final ne diffèrent que par des pixels identiques (noirs) des zones caviardées. Cela signifie par la contraposée que tout pixel hors desdites zones est identique dans le document original et le document final, d'où l'authenticité.

Ce procédé ne comprend que la mise en œuvre par des moyens de traitement de données 11b du (deuxième) serveur 10b (qui joue le rôle de vérifieur), d'une étape de vérification que ladite preuve à divulgation nulle de connaissances est valide.

Comme expliqué, cette vérification n'est pas interactive (le vérifieur n'a pas besoin de contacter le prouveur) et se fait simplement en temps constant en vérifiant que la preuve est authentique, ce qui démontre (à une probabilité infime près) au serveur 10b que la propriété prétendue est vraie, i.e. que l'ensemble du document final hormis les zones caviardées est identique au document original. Il se convainc ainsi que le document qu'on lui a fourni n'est pas un faux malgré ces zones.

Ainsi, dès lors que la preuve est vérifiée, le document final est considéré authentique.

Si le document final est en outre associé à un condensat du document original obtenu par une fonction de hachage donnée, ladite preuve à divulgation nulle de connaissances est alors également une preuve du fait que ledit condensat est bien le résultat de l'application de ladite fonction de hachage donnée au document original, et cette deuxième propriété est garantie vraie dès lors que la preuve est déterminée valide (en d'autres termes la preuve n'est valide que si les deux propositions sont simultanément vraies). Le serveur 10b sait ainsi qu'un document original a été fourni à l'équipement 1, que son condensat a été vérifié et qu'elle correspondait au condensat fourni.

Si ledit condensat est signé par un organisme émetteur du document original, le procédé de vérification comprend en outre une étape de vérification de la validité de ladite signature, de sorte à garantir qu'aucune faille n'est possible.

*Produit programme d'ordinateur*

Selon un troisième et un quatrième aspects, l'invention concerne un produit programme d'ordinateur comprenant des instructions de code pour l'exécution (en particulier sur les moyens de traitement de données 11, 11b de l'équipement 1 ou du deuxième serveur 10b) d'un procédé selon le premier aspect de l'invention de caviardage d'un document original ou un procédé selon le deuxième aspect de l'invention de vérification de l'authenticité d'un document final, ainsi que des moyens de stockage lisibles par un équipement informatique (une mémoire de l'équipement 1 ou du deuxième serveur 10b) sur lequel on trouve ce produit programme d'ordinateur.

**Revendications**

1. Procédé de caviardage d'un document original constitué d'une matrice de n x m pixels chacun défini par un vecteur d'au moins une valeur numérique, le procédé comprenant la mise en œuvre par des moyens de traitement de données (11) d'un équipement (1), d'étapes de :

   (a) détermination d'un ensemble de pixels de ladite matrice correspondant à une ou plusieurs zones à caviarder du document original ;
   (b) génération d'un document final correspondant au document original dans lequel les vecteurs définissant les pixels dudit ensemble sélectionné sont remplacés par un vecteur arbitraire ;
   (c) génération d'une preuve à divulgation nulle de connaissances du fait que les matrices de pixels du document original et du document final ne diffèrent que par des pixels appartenant audit ensemble sélectionné, où adite preuve à divulgation nulle de connaissance garantit que $\forall i,j \in [\![1;n]\!] \times [\![1;m]\!]$,

   $$P^I{}_{i,j} \neq P^F{}_{i,j}$$

   $$\Rightarrow (i;j) \in \mathcal{C}(E),$$

   où E est ledit ensemble de pixels sélectionné, et $P^I{}_{i,j}$ et $P^F{}_{i,j}$ les pixels respectivement des documents initial et final.

2. Procédé selon la revendication 1, dans lequel le document original est associé à un condensat obtenu par une fonction de hachage donnée, ladite preuve à divulgation nulle de connaissance générée à l'étape (c) étant également une preuve du fait que ledit condensat est bien le résultat de l'application de ladite fonction de hachage donnée au document original.

3. Procédé selon la revendication 2, dans lequel le document original et ledit condensat sont fournis par un organisme émetteur, le procédé comprenant en outre la vérification préalable par lesdits moyens de traitement de données (11) que ledit condensat est bien le résultat de l'application de ladite fonction de hachage donnée au document original.

4. Procédé selon la revendication 3, dans lequel ledit condensat est signé par ledit organisme émetteur.

5. Procédé selon l'une des revendications 1 à 4, dans lequel l'étape (a) comprend la définition préalable de chaque zone à caviarder du document original sous la forme d'une figure géométrique plane, ledit ensemble de pixels correspondant à une ou plusieurs zones à caviarder du document original étant déterminé comme l'ensemble des pixels de la matrice inclus dans au moins une desdites formes géométriques planes.

6. Procédé selon la revendication 5, dans lequel lesdites formes géométriques planes sont des rectangles chacun définis par quatre paramètres.

**7.** Procédé selon la revendication 6, dans lequel au moins un rectangle définissant une zone à caviarder du document original est directement sélectionné par l'utilisateur au moyen d'une interface (13) de l'équipement (1), l'étape (a) comprenant la détermination des valeurs desdits quatre paramètres définissant le rectangle sélectionné.

**8.** Procédé selon l'une des revendications 6 et 7, dans lequel une chaine de caractère à caviarder du document original est sélectionnée par l'utilisateur au moyen d'une interface (13) de l'équipement (1), l'étape (a) comprenant la détermination des valeurs desdits quatre paramètres du ou des rectangles de l'image nécessaires pour recouvrir ladite chaine de caractère sectionnée.

**9.** Procédé selon l'une des revendications 1 à 8, dans lequel la preuve à divulgation nulle de connaissances générée à l'étape (c) est un objet cryptographique de type zkSNARK.

**10.** Procédé selon l'une des revendications 1 à 9, dans lequel ladite fonction de hachage donnée est une fonction de hachage basée sur la somme de sous-ensembles permettant de préserver l'efficacité de la génération de la preuve.

**11.** Procédé comprenant un procédé de caviardage selon l'une des revendications 1 à 10 et un procédé de vérification de l'authenticité d'un document final obtenu par la mise en œuvre sur un document original du procédé de caviardage selon l'une des revendications 1 à 10, le document final étant associé à une preuve à divulgation nulle de connaissances du fait que les matrices de pixels du document original et du document final ne diffèrent que par des pixels appartenant audit ensemble sélectionné, générée selon le procédé de caviardage selon l'une des revendications 1 à 10, e procédé de vérification comprenant la mise en œuvre par des moyens de traitement de données d'un serveur (10b), d'une étape de vérification que ladite preuve à divulgation nulle de connaissances est valide.

**12.** Procédé selon la revendication 11, dans lequel le document final est en outre associé à un condensat du document original obtenu par une fonction de hachage donnée, ladite preuve à divulgation nulle de connaissances étant également une preuve du fait que ledit condensat est bien le résultat de l'application de ladite fonction de hachage donnée au document original.

**13.** Procédé selon la revendication 12, dans lequel ledit condensat est signé par un organisme émetteur du document original, le procédé comprenant en outre une étape de vérification de la validité de ladite signature.

**14.** Produit programme d'ordinateur comprenant des instructions de code pour l'exécution d'un procédé selon l'une des revendications 1 à 13

**15.** Moyen de stockage lisible par un équipement informatique sur lequel un produit programme d'ordinateur comprend des instructions de code pour l'exécution d'un procédé selon l'une des revendications 1 à 13

**Patentansprüche**

**1.** Verfahren zum Einschwärzen eines Originaldokuments, das aus einer Matrix von n x m Pixeln besteht, die jeweils durch einen Vektor mit mindestens einem Zahlenwert definiert sind, wobei das Verfahren die Umsetzung folgender Schritte durch Datenverarbeitungsmittel (11) eines Geräts (1) umfasst:

(a) Bestimmen einer Pixeleinheit der Matrix entsprechend einer oder mehreren einzuschwärzenden Zonen des Originaldokuments;
(b) Generieren eines endgültigen Dokuments entsprechend dem Originaldokument, wobei die Vektoren, welche die Pixel der ausgewählten Einheit definieren, durch einen willkürlichen Vektor ersetzt werden;
(c) Generieren eines Zero-Knowledge-Beweises dafür, dass sich die Pixelmatrizen des Originaldokuments und des endgültigen Dokuments nur durch Pixel unterscheiden, die zu der ausgewählten Einheit gehören, wobei der Zero-Knowledge-Beweis garantiert, dass $\forall i,j \in [\![1;n]\!] \times [\![1;m]\!]$,

$$P^{I}_{\ i,j} \neq P^{F}_{\ i,j} \Rightarrow (i;j) \in \mathcal{C}(E),$$

wobei E die ausgewählte Pixeleinheit ist und $P^{I}_{i,j}$ und $P^{F}_{i,j}$ jeweils die Pixel des ursprünglichen und des endgültigen Dokuments sind.

2. Verfahren nach Anspruch 1, wobei das Originaldokument einem Kondensat zugeordnet ist, das durch eine gegebene Hashfunktion erhalten wird, wobei der in Schritt (c) generierte Zero-Knowledge-Beweis ebenfalls ein Beweis dafür ist, dass das Kondensat sehr wohl das Ergebnis der Anwendung der gegebenen Hashfunktion auf das Originaldokument ist.

3. Verfahren nach Anspruch 2, wobei das Originaldokument und das Kondensat von einer ausstellenden Stelle bereitgestellt werden, wobei das Verfahren des Weiteren die vorherige Überprüfung durch die Datenverarbeitungsmittel (11) umfasst, dass das Kondensat sehr wohl das Ergebnis der Anwendung der gegebenen Hashfunktion auf das Originaldokument ist.

4. Verfahren nach Anspruch 3, wobei das Kondensat von der ausstellenden Stelle signiert wird.

5. Verfahren nach einem der Ansprüche 1 bis 4, wobei der Schritt (a) die vorherige Definition jeder einzuschwärzenden Zone des Originaldokuments in Form einer ebenen geometrischen Figur umfasst, wobei die Pixeleinheit, die einer oder mehreren einzuschwärzenden Zonen des Originaldokuments entspricht, als Pixeleinheit der Matrix bestimmt wird, die in mindestens einer der ebenen geometrischen Formen enthalten ist.

6. Verfahren nach Anspruch 5, wobei die ebenen geometrischen Formen Rechtecke sind, die durch vier Parameter definiert sind.

7. Verfahren nach Anspruch 6, wobei mindestens ein Rechteck, das eine einzuschwärzende Zone des Originaldokuments definiert, von dem Benutzer mittels einer Benutzeroberfläche (13) des Geräts (1) direkt ausgewählt wird, wobei der Schritt (a) die Bestimmung der Werte der vier Parameter umfasst, die das ausgewählte Rechteck definieren.

8. Verfahren nach einem der Ansprüche 6 und 7, wobei eine einzuschwärzende Zeichenkette des Originaldokuments von dem Benutzer mittels einer Benutzeroberfläche (13) des Geräts (1) ausgewählt wird, wobei der Schritt (a) die Bestimmung der Werte der vier Parameter des oder der Rechtecke des Bildes umfasst, die zum Abdecken der ausgewählten Zeichenkette notwendig sind.

9. Verfahren nach einem der Ansprüche 1 bis 8, wobei der in Schritt (c) generierte Zero-Knowledge-Beweis ein kryptografisches Objekt des Typs zkSNARK ist.

10. Verfahren nach einem der Ansprüche 1 bis 9, wobei die gegebene Hashfunktion eine Hashfunktion ist, die auf der Summe von Untereinheiten basiert, wodurch das Bewahren der Effizienz der Beweisgenerierung ermöglicht wird.

11. Verfahren, umfassend ein Verfahren zum Einschwärzen nach einem der Ansprüche 1 bis 10 und ein Verfahren zum Überprüfen der Echtheit eines endgültigen Dokuments, das durch die Umsetzung, an einem Originaldokument, des Verfahrens zum Einschwärzen nach einem der Ansprüche 1 bis 10 erhalten wird, wobei das endgültige Dokument einem Zero-Knowledge-Beweis dafür, dass sich die Pixelmatrizen des Originaldokuments und des endgültigen Dokuments nur durch Pixel unterscheiden, die zu der ausgewählten Einheit gehören, zugeordnet wird, der gemäß dem Verfahren zum Einschwärzen nach einem der Ansprüche 1 bis 10 generiert wird, wobei das Verfahren zum Überprüfen die Umsetzung, durch Datenverarbeitungsmittel eines Servers (10b), eines Schritts der Überprüfung umfasst, dass der Zero-Knowledge-Beweis gültig ist.

12. Verfahren nach Anspruch 11, wobei das endgültige Dokument des Weiteren einem Kondensat des Originaldokuments zugeordnet ist, das durch eine gegebene Hashfunktion erhalten wird, wobei der Zero-Knowledge-Beweis ebenfalls ein Beweis dafür ist, dass das Kondensat sehr wohl das Ergebnis der Anwendung der gegebenen Hashfunktion auf das Originaldokument ist.

13. Verfahren nach Anspruch 12, wobei das Kondensat von einer ausstellenden Stelle des Originaldokuments signiert wird, wobei das Verfahren des Weiteren einen Schritt der Überprüfung der Gültigkeit der Signatur umfasst.

14. Computerprogrammprodukt, umfassend Codeanweisungen für die Ausführung eines Verfahrens nach einem der Ansprüche 1 bis 13.

15. Speichermittel, das von einem Computergerät lesbar ist, auf dem ein Computerprogrammprodukt Codeanweisungen für die Ausführung eines Verfahrens nach einem der Ansprüche 1 bis 13 umfasst.

**Claims**

1. A method for redacting an original document consisting of a matrix of n x m pixels each defined by a vector having at least one numerical value, the method comprising implementation, by data processing means (11) of equipment (1), of steps of:

   (a) determining a set of pixels of said matrix corresponding to one or more areas to be blacked-out from the original document;
   (b) generating a final document corresponding to the original document in which the vectors defining the pixels of said selected set are replaced by an arbitrary vector;
   (c) generating a zero-disclosure proof of knowledge of the fact that the pixel matrixes of the original document and of the final document only differ via pixels belonging to said selected set, wherein said zero-disclosure proof of knowledge guarantees that $\forall i,j \in [\![1;n]\!] \times [\![1;m]\!]$,

   $$P^{I}_{\ i,j} \neq P^{F}_{\ i,j}, \Rightarrow (i;j) \in \mathcal{C}(E),$$

   where E is said selected set of pixels, and $P^{I}_{i,j}$ and $P^{F}_{i?j}$ the pixels respectively of the initial and final documents.

2. The method according to claim 1, wherein the original document is associated with a condensate obtained by a given hashing function, said zero-disclosure proof of knowledge generated at step (c) also being proof of the fact that said condensate is indeed the result of application of said given hashing function to the original document.

3. The method according to claim 2, wherein the original document and said condensate are provided by an issuing body, the method further comprising prior verification, by said data processing means (11), that said condensate is indeed the result of application of said given hashing function to the original document.

4. The method according to claim 3, wherein said condensate is signed by said issuing body.

5. The method according to one of claims 1 to 4, wherein step (a) comprises the prior definition of each area to be blacked-out from the original document in the form of a planar geometric figure, said set of pixels corresponding to one or more areas to be blacked-out from the original document being determined as the set of pixels of the matrix included in at least one of said planar geometric shapes.

6. The method according to claim 5, wherein said planar geometric shapes are rectangles each defined by four parameters.

7. The method according to claim 6, wherein at least one rectangle defining an area to be blacked-out from the original document is directly selected by the user by means of an interface (13) of the equipment (1), step (a) comprising the determination of the values of said four parameters defining the selected rectangle.

8. The method according to one of claims 6 and 7, wherein a chain of characters to be blacked-out from the original document is selected by the user by means of an interface (13) of the equipment (1), step (a) comprising the determination of the values of said four parameters of the rectangle(s) of the image required to cover said selected chain of characters.

9. The method according to one of claims 1 to 8, wherein the zero-knowledge proof generated at step (c) is a cryptographic object of zkSNARK type.

10. The method according to one of claims 1 to 9, wherein said given hashing function is a hashing function based on the subset sum allowing preservation of the efficacy of proof generation.

**11.** The method comprising a redaction method according to one of claims 1 to 10 and a method for verifying the authenticity of a final document obtained by implementing on an original document a redacting method according to one of claims 1 to 10, the final document being associated with said zero-disclosure proof of knowledge of the fact that the pixel matrixes of the original document and of the final document only differ via pixels belonging to said selected set, generated according to the redaction method according to one of claims 1 to 10, the verification method comprising the implementation, by data processing means of a server (10b), of a step to verify that said zero-disclosure proof is valid.

**12.** The method according to claim 11, wherein the final document is further associated with a condensate of the original document obtained by a given hashing function, said zero-disclosure proof also being proof of the fact that said condensate is indeed the result of application of said given hashing function to the original document.

**13.** The method according to claim 12, wherein said condensate is signed by an issuing body of the original document, the method further comprising a step to verify the validity of said signature.

**14.** A computer program product comprising code instructions to execute a method according to one of claims 1 to 13.

**15.** A storage means readable by computer equipment on which a computer program product comprises code instructions to execute a method according to one of claims 1 to 13.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Pinocchio: Nearly Practical Verifiable Computation. **BRYAN ; PARNO ; CRAIG GENTRY ; JON HOWELL ; MARIANA RAYKOVA.** Proceedings of the IEEE Symposium on Security and Privacy. IEEE, 21 Mai 2013
- PhotoProof: cryptographic image authentication for any set of permissible transformations, proc. **ASSA NAVEH ; ERAN TROMER.** IEEE Symposium on Security & Privacy (Oakland) 2016. IEEE, 2016, 255-271
- **O. GOLDREICH ; S. GOLDWASSER ; S. HALEVI.** Collision-free hashing from lattice problems. *Technical report,* 1996
- **E. BEN-SASSON ; A. CHIESA ; E. TROMER ; M. VIRZA.** Scalable Zero-Knowledge via Cycles of Elliptic Curves. *CRYPTO,* 2014
- Geppetto: Versatile Verifiable Computation. **CRAIG COSTELLO ; CEDRIC FOURNET ; JON HOWELL ; MARKULF KOHLWEISS ; BENJAMIN KREUTER ; MICHAEL NAEHRIG ; BRYAN PARNO ; SAMEE ZAHUR.** Proceedings of the IEEE Symposium on Security and Privacy. IEEE, 18 Mai 2015
- **MICHAEL BACKES ; MANUEL BARBOSA ; DARIO FIORE ; RAPHAEL REISCHUK.** ADSNARK : Nearly Practical and Privacy-Preserving Proofs on Authenticated Data. *Proceeding of the IEEE Symposium on Security and Privacy,* 18 Mai 2015
- **ELI BEN-SASSON ; ALESSANDRO CHIESA ; DANIEL GENKIN ; ERAN TROMER ; MADARS VIRZA.** SNARKs for C: Verifying Program Executions Succinctly and in Zero Knowledge. *Proceedings of the 33rd Annual International Cryptology Conference, CRYPTO,* 2013, vol. 13, 90-108